# EUROPEAN PATENT SPECIFICATION

(11) **EP 2 609 789 B1**
(45) Date of publication and mention of the grant of the patent: **12.09.2018**
(21) Application number: 11748469.1
(22) Date of filing: 22.07.2011
(51) Int. Cl.: H02M 3/335, H05B 37/02, H05B 33/08

(54) **METHODS AND APPARATUS FOR DRIVING LIGHT EMITTING DIODES (LEDS) COMPRISING PARALLEL FLYBACK CONVERTER STAGES**
VERFAHREN UND VORRICHTUNG ZUR ANSTEUERUNG LICHTEMITTIERENDER DIODEN (LEDS) MIT PARALLELEN SPERRWANDLER-STUFEN
PROCÉDÉS ET APPAREIL DE COMMANDE DE DIODES ÉLECTROLUMINESCENTES (DEL) COMPRENANT DES ÉTAGES DE CONVERSION FLYBACK EN PARALLÈLE

(30) Priority: 24.08.2010 US 376314 P
(43) Date of publication of application: 03.07.2013
(73) Proprietor: Philips Lighting Holding B.V., 5656 AE Eindhoven (NL)
(72) Inventor: ABOULNAGA, Aly, NL-5656 AE Eindhoven (NL)
(74) Representative: van Eeuwijk, Alexander Henricus Waltherus
(86) International application number: PCT/IB2011/053279
(87) International publication number: WO 2012/025844

(56) References cited:
- US-A- 5 675 480
- US-A1- 2002 135 338
- US-A1- 2009 066 262
- AMAN KUMAR JHA ET AL: "Parallel Power Flow AC/DC Converter with High Input Power Factor and Tight Output Voltage Regulation for Universal Voltage Application", POWER ELECTRONICS, DRIVES AND ENERGY SYSTEMS, 2006 INTERNATIONAL CONFE RENCE ON, IEEE, PI, 1 December 2006 (2006-12-01), pages 1-7, XP031073032, ISBN: 978-0-7803-9771-2

## Description

### Technical Field

The present invention is directed generally to power control for driving LEDs. More particularly, various inventive methods and apparatus disclosed herein relate to drivers for LEDs comprising parallel flyback converters.

### Background

Digital lighting technologies, i.e. illumination based on semiconductor light sources, such as light-emitting diodes (LEDs), offer a viable alternative to traditional fluorescent, HID, and incandescent lamps. Functional advantages and benefits of LEDs include high energy conversion and optical efficiency, durability, lower operating costs, and many others. Recent advances in LED technology have provided efficient and robust full-spectrum lighting sources that enable a variety of lighting effects in many applications. Some of the fixtures embodying these sources feature a lighting module, including one or more LEDs capable of producing different colors, e.g. red, green, and blue, as well as a processor for independently controlling the output of the LEDs in order to generate a variety of colors and color-changing lighting effects, for example, as discussed in detail in U.S. Patent Nos. 6,016,038 and 6,211,626.

Flyback converters can be used for alternating current to direct current (AC/DC) conversion in driving light sources such as LEDs. One known flyback converter includes a flyback transformer, a metal-oxide semiconductor field effect transistor (MOSFET) and a snubber circuit. For greater output power requirements, known flyback converters require MOSFETs with greater voltage and current ratings. Higher voltage and current ratings, and therefore higher power ratings, result in MOSFETs with greater gate capacitance. Such transistors are comparatively expensive. Moreover, high-current MOSFETs must be driven by circuits that have commensurately high power requirements. Furthermore, the comparatively high gate capacitance is difficult to drive. Among other practical shortcomings, high power MOSFETs and required driver circuits are rather expensive.

Moreover, it is beneficial for the flyback transformers of flyback converters to have a comparatively low leakage inductance. As the power requirements of the flyback converter increase, the overall size of the flyback transformer increases and maintaining low leakage inductance is more difficult, if not impossible. Additionally, and among other drawbacks, flyback transformers for flyback converters having increased power handling capabilities are comparatively expensive and physically large. Thus, in addition to their cost, the high power flyback transformers require additional space.

Finally, in addition to the drawbacks of known flyback converters for use in comparatively high power applications, the use of the high power MOSFET and the comparatively large flyback transformer in such flyback converters results in poor performance at comparatively low power requirements. Notably, the overall performance of such known flyback converters, the input power factor (PF), the total harmonic distortion (THD), and the efficiency decline at lower power/lighter load requirements. This is due primarily to increased switching losses at the high-power MOSFET.

Thus, there is a need in the art to provide a driver employing a flyback AC/DC converter circuit that provides DC power to LEDs over a comparatively wide power range, while overcoming at least the deficiencies of known flyback AC/DC converters described above.

US2009/0066262 discloses a flyback type boosting converter wherein two flyback circuits in parallel are alternately controlled for suppressing a huge output capacitor.

### Summary

The present disclosure is directed to inventive methods and apparatuses comprising parallel AC/DC flyback converters for driving light sources (e.g., LEDs). For example, the methods and apparatus of the present disclosure beneficially provide high output power and yet scalable from a comparatively low output power to a comparatively high output power, while providing comparatively high performance over a comparatively wide range of output power. Beneficially, the methods and apparatuses require comparatively low power MOSFETs and comparatively small flyback transformers. The desired output power can be achieved by selectively enabling the proper number of parallel flyback AC/DC converter stages to meet the demand of the output power.

Generally, in one aspect, an apparatus for driving a light source is disclosed. The apparatus includes a first flyback AC/DC converter stage comprising a first switch, a first switch controller and a comparator; and a second flyback AC/DC converter stage comprising a second switch and a second switch controller, the second flyback AC/DC converter being electrically connected in parallel with the first flyback AC/DC converter stage.

Generally, in another aspect, a method of driving a light source is disclosed. The method includes: sensing a voltage over a sense resistor in a first flyback AC/DC converter stage; comparing the voltage to a threshold voltage; and enabling a second flyback AC/DC converter stage if the voltage is greater than the threshold voltage.

In some embodiments, the apparatus includes a third flyback AC/DC converter comprising a third switch and a third switch controller. The third flyback AC/DC converter is electrically connected in parallel with the first flyback AC/DC converter and the second flyback AC/DC converter. The apparatus may further include a fourth flyback AC/DC converter comprising a fourth switch and a fourth switch controller. The fourth flyback AC/DC converter is electrically connected in parallel with the first flyback AC/DC converter, the second flyback AC/DC converter and the third flyback AC/DC converter.

In an embodiment, the method includes enabling a third flyback AC/DC converter stage if the voltage is greater than the threshold voltage after the enabling of the second AC/DC converter stage.

In an embodiment, the method includes enabling a fourth flyback AC/DC converter stage if the voltage is greater than the threshold voltage after the enabling of the third AC/DC converter stage.

In an embodiment, the method includes not enabling the second stage if the voltage is less than the threshold voltage.

In an embodiment, the method includes, after enabling the fourth flyback AC/DC converter stage, sensing the voltage over the sense resistor, and if the voltage is less than the threshold voltage, disabling the fourth flyback AC/DC converter stage.

In an embodiment, the method includes, after disabling the fourth flyback AC/DC converter stage, sensing the voltage over the sense resistor, and if the voltage is less than the threshold voltage, disabling the third flyback AC/DC converter stage.

In an embodiment, the method includes, after disabling the third flyback AC/DC converter stage, sensing the voltage over the sense resistor, and if the voltage is less than the threshold voltage, disabling the second flyback AC/DC converter stage.

As used herein for purposes of the present disclosure, the term "LED" should be understood to include any electroluminescent diode or other type of carrier injection/junction-based system that is capable of generating radiation in response to an electric signal. Thus, the term LED includes, but is not limited to, various semiconductor-based structures that emit light in response to current, light emitting polymers, organic light emitting diodes (OLEDs), electroluminescent strips, and the like. In particular, the term LED refers to light emitting diodes of all types (including semi-conductor and organic light emitting diodes) that may be configured to generate radiation in one or more of the infrared spectrum, ultraviolet spectrum, and various portions of the visible spectrum (generally including radiation wavelengths from approximately 400 nanometers to approximately 700 nanometers). Some examples of LEDs include, but are not limited to, various types of infrared LEDs, ultraviolet LEDs, red LEDs, blue LEDs, green LEDs, yellow LEDs, amber LEDs, orange LEDs, and white LEDs (discussed further below). It also should be appreciated that LEDs may be configured and/or controlled to generate radiation having various bandwidths (e.g., full widths at half maximum, or FWHM) for a given spectrum (e.g., narrow bandwidth, broad bandwidth), and a variety of dominant wavelengths within a given general color categorization.

For example, one implementation of an LED configured to generate essentially white light (e.g., a white LED) may include a number of dies which respectively emit different spectra of electroluminescence that, in combination, mix to form essentially white light. In another implementation, a white light LED may be associated with a phosphor material that converts electroluminescence having a first spectrum to a different second spectrum

It should also be understood that the term LED does not limit the physical and/or electrical package type of an LED. For example, as discussed above, an LED may refer to a single light emitting device having multiple dies that are configured to respectively emit different spectra of radiation (e.g., that may or may not be individually controllable). Also, an LED may be associated with a phosphor that is considered as an integral part of the LED (e.g., some types of white LEDs).

The term "light source" should be understood to refer to any one or more of a variety of radiation sources, including, but not limited to, LED-based sources (including one or more LEDs as defined above), incandescent sources (e.g., filament lamps, halogen lamps), fluorescent sources, phosphorescent sources, high-intensity discharge sources (e.g., sodium vapor, mercury vapor, and metal halide lamps), lasers, other types of electroluminescent sources, pyro-luminescent sources (e.g., flames), candle-luminescent sources (e.g., gas mantles, carbon arc radiation sources), photo-luminescent sources (e.g., gaseous discharge sources), cathode luminescent sources using electronic satiation, galvano-luminescent sources, crystallo-luminescent sources, kine-luminescent sources, thermo-luminescent sources, triboluminescent sources, sonoluminescent sources, radioluminescent sources, and luminescent polymers.

A given light source may be configured to generate electromagnetic radiation within the visible spectrum, outside the visible spectrum, or a combination of both. Hence, the terms "light" and "radiation" are used interchangeably herein. Additionally, a light source may include as an integral component one or more filters (e.g., color filters), lenses, or other optical components. Also, it should be understood that light sources may be configured for a variety of applications, including, but not limited to, indication, display, and/or illumination. An "illumination source" is a light source that is particularly configured to generate radiation having a sufficient intensity to effectively illuminate an interior or exterior space. In this context, "sufficient intensity" refers to sufficient radiant power in the visible spectrum generated in the space or environment (the unit "lumens" often is employed to represent the total light output from a light source in all directions, in terms of radiant power or "luminous flux") to provide ambient illumination (i.e., light that may be perceived indirectly and that may be, for example, reflected off of one or more of a variety of intervening surfaces before being perceived in whole or in part).

The term "lighting fixture" is used herein to refer to an implementation or arrangement of one or more lighting units in a particular form factor, assembly, or package. The term "lighting unit" is used herein to refer to an apparatus including one or more light sources of same or different types. A given lighting unit may have any one of a variety of mounting arrangements for the light source(s), enclosure/housing arrangements and shapes, and/or electrical and mechanical connection configurations. Additionally, a given lighting unit optionally may be associated with (e.g., include, be coupled to and/or packaged together with) various other components (e.g., control circuitry) relating to the operation of the light source(s). An "LED-based lighting unit" refers to a lighting unit that includes one or more LED-based light sources as discussed above, alone or in combination with other non LED-based light sources. A "multi-channel" lighting unit refers to an LED-based or non LED-based lighting unit that includes at least two light sources configured to respectively generate different spectrums of radiation, wherein each different source spectrum may be referred to as a "channel" of the multi-channel lighting unit.

The term "controller" is used herein generally to describe various apparatus relating to the operation of one or more light sources. A controller can be implemented in numerous ways (e.g., such as with dedicated hardware) to perform various functions discussed herein. A "processor" is one example of a controller which employs one or more microprocessors that may be programmed using software (e.g., microcode) to perform various functions discussed herein. A controller may be implemented with or without employing a processor, and also may be implemented as a combination of dedicated hardware to perform some functions and a processor (e.g., one or more programmed microprocessors and associated circuitry) to perform other functions. Examples of controller components that may be employed in various embodiments of the present disclosure include, but are not limited to, conventional microprocessors, application specific integrated circuits (ASICs), and field-programmable gate arrays (FPGAs). In certain embodiments, a power factor controller (PFC) is implemented to control a plurality of flyback AC/DC converter stages.

In various implementations, a processor or controller may be associated with one or more storage media (generically referred to herein as "memory," e.g., volatile and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects of the present invention discussed herein. The terms "program" or "computer program" are used herein in a generic sense to refer to any type of computer code (e.g., software or microcode) that can be employed to program one or more processors or controllers.

### Brief Description of the Drawings

In the drawings, like reference characters, generally refer to the same parts throughout the different views. Also, the drawings are not necessarily to scale, emphasis instead generally being placed upon illustrating the principles of the invention.
Fig. 1 illustrates a simplified schematic block diagram of a lighting system in accordance with a representative embodiment.
Fig. 2 illustrates a conceptual diagram of enabling and disabling flyback AC/DC converter stages to provide a desired output power in accordance with a representative embodiment.
FIG. 3 illustrates a simplified schematic diagram of a driver circuit comprising parallel flyback converter stages in accordance with a representative embodiment.
Fig. 4 illustrates graphs of output power versus time, feedback voltage versus time, average sense voltage across a sense resistor, gate-to-source (Vgs) across a second MOSFET versus time, Vgs across a third MOSFET versus time, and Vgs across a fourth MOSFET versus time in accordance with a representative embodiment.
Fig. 5 illustrates graphs of output power versus time, feedback voltage versus time, average sense voltage across a sense resistor, gate-to-source (Vgs) across a second MOSFET versus time, Vgs across a third MOSFET versus time, and Vgs across a fourth MOSFET versus time in accordance with a representative embodiment.
Fig. 6 illustrates a flow-diagram of a method of driving a light source in accordance with a representative embodiment.

### Detailed Description

In the following detailed description, for purposes of explanation and not limitation, representative embodiments disclosing specific details are set forth in order to provide a thorough understanding of the present teachings. However, it will be apparent to one having ordinary skill in the art having had the benefit of the present disclosure that other embodiments according to the present teachings that depart from the specific details disclosed herein remain within the scope of the appended claims.

As described above, among other drawbacks, known driver circuits require comparatively high current MOSFETs and large flyback transformers.

Applicants have recognized and appreciated that it would be beneficial to provide a driver circuit with comparatively lower power requirements. Beneficially, the driver circuits of the representative embodiments comprise comparatively low power MOSFETs and comparatively small flyback transformers.

In view of the foregoing, various embodiments and implementations of the present invention are directed to methods and apparatus for driving light sources (e.g., LEDs) comprising a plurality of flyback AC/DC converters connected electrically in parallel. The desired output (DC) power can be achieved by selectively enabling the proper number of parallel flyback AC/DC converter stages to meet the demand of the output power.

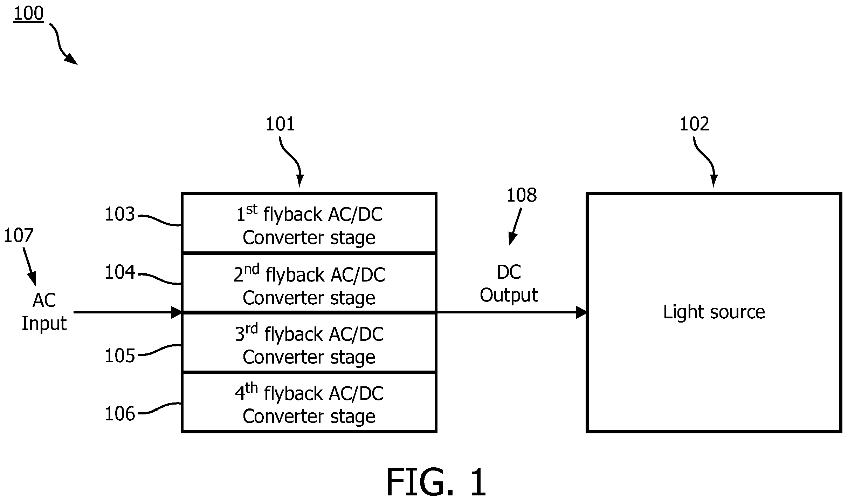

Referring to FIG. 1, in one embodiment, a lighting system 100 comprises a driver circuit 101 and a light source 102. The driver circuit 101 comprises a first flyback AC/DC converter stage 103, a second flyback AC/DC converter stage 104, a third flyback AC/DC converter stage 105, and a fourth flyback AC/DC converter stage 106. An AC input 107 is converted to a DC output 108 by the driver circuit 101; and the DC output 108 is provided to the light source 102.

As described in greater detail below, the flyback AC/DC converter stages 103-106 are connected electrically in parallel, and are selectively enabled/disabled based on the power/load requirements of the light source 102. The light source 102 illustratively comprises a plurality of LEDs, which are operable over a comparatively wide power range. Illustratively, the minimum output power provided to the light source 102 is approximately 0W and the maximum output power provided to the light source is approximately 200W. Generally, each of the flyback AC/DC converter stages 103-106 is configured to provide an output power in the range of approximately 0W to approximately 50 W. As described more fully herein, as more power is required by the light source 102, more flyback AC/DC converter stages are enabled to provide more power thereto. Similarly, if the power requirements of the light source are reduced, the number of flyback AC/DC converter staged enabled are reduced. It is emphasized that the maximum output power, the output power range of each flyback AC/DC converter stage and the number of flyback AC/DC converter stages are merely illustrative. The maximum output power, the output power range of each flyback AC/DC converter stage and the number of flyback AC/DC converter stages may each may be greater or less than the illustrative power and number of stages described in connection with the representative embodiment of Fig. 1.

As will become clearer as the present description continues, the number of flyback AC/DC converter stages implemented in the driver circuit 101 governs the dynamic range of operational power of the light source 102. As such, for a given output power range of each flyback AC/DC converter stage, the maximum output power can be increased or decreased by increasing or decreasing the number of flyback AC/DC converter stages connected electrically in parallel. It is emphasized that the implementation of four flyback AC/DC converter stages connected in parallel is merely illustrative, and the driver circuit 101 may comprise more or fewer than four flyback AC/DC converter stages connected in parallel. Beneficially, and as described more fully below, providing a plurality of flyback AC/DC converter stages reduces the power requirements of certain components of each flyback AC/DC converter stage, such as a switch (e.g., a MOSFET), and a flyback transformer.

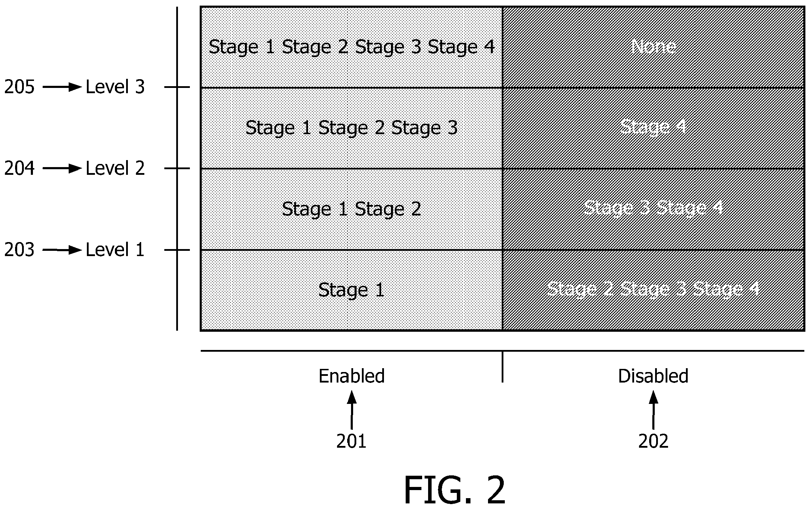

Fig. 2 illustrates a conceptual diagram of enabling and disabling flyback AC/DC converter stages in a driver circuit to provide a desired output power to a light source in accordance with a representative embodiment. The flyback AC/DC converter stages, the driver circuit and the light source may be as described above in connection with the representative embodiments of Fig. 1. For ease of description, the present example illustrates the function of driver circuit 101, comprising flyback AC/DC converter stages 103-106 connected in parallel, and providing power to light source 102. Again, more or fewer flyback AC/DC converter stages may be implemented depending on the desired dynamic power range of the light source being driven by the driver circuit, and the limits of the each individual flyback AC/DC converter stage.

As the demand for power by the light source 102 increases, the number of flyback AC/DC converter stages 103-106 enabled increases. The process of enabling flyback AC/DC converter stages 103-106 is shown at side 201 of the conceptual diagram. As the demand for power by the light source 102 decreases, the number of flyback AC/DC converter stages 103-106 enabled decreases. The process of disabling the flyback AC/DC converter stages 103-106 is shown at side 202 of the conceptual diagram decreases. As there are four stages, there are four output power levels of operation. In keeping with the example set forth above, each of the flyback AC/DC converter stages 103-106 provides between 0W and 50W of output power to the light source 102, so the dymanic range of power provided to the light source 102 is approximately 0W to approximately 200W. Each of the flyback AC/DC converter stages 103-106 is engaged based on the required output power, which is turn in governed by a respective threshold value. As described more fully below, the threshold value is illustratively a threshold voltage across a sense resistor. Alternatively, a threshold current across a sense resistor can be used for the threshold value. In the present example there are three threshold voltage levels commensurate with output power levels, LEVEL 1 (203), LEVEL 2 (204), Level 3 (205), respectively, that are compared against the output power of the driver circuit 101.

If the average sense voltage is below the threshold voltage commensurate with output power LEVEL 1 (203), only the first flyback AC/DC converter stage 103 is enabled, and the second, third and fourth flyback AC/DC converter stages 104-106 are disabled. In keeping with the present illustrative example, the output power provided to the light source 102 is between 0W and 50W. Notably, regardless of the output power requirement of the light source at any given time, the first flyback AC/DC converter stage 103 is always enabled because the first flyback AC/DC converter stage 103 supplies electrical power not only over all levels of output power, but also supplies power to a controller (not shown in Figs. 1 and 2) for operation of all flyback AC/DC converter stages 103-106 of the driver circuit 101.

If the demand of output power exceeds LEVEL 1(203) (e.g., 50W in the present illustrative example), the average sense voltage is above the threshold voltage associated with output power LEVEL1(203), and the first and second flyback AC/DC converter stages 103, 104 are enabled. With both the first and second flyback AC/DC converter stages 103, 104 enabled, the output power provided to the light source 102 in the present illustrative example is between 50W and 100W.

If the demand of output power exceeds LEVEL 2(204) (e.g., 100W in the present illustrative example), the average sense voltage is above the threshold voltage associated with output power LEVEL2(204) and the first, second and third flyback AC/DC converter stages 103-105 are enabled. With the first, second and third flyback AC/DC converter stages 103,104, 105 enabled, in the present illustrative example, the output power provided to the light source 102 is between 100W and 150W.

If the demand of output power exceeds LEVEL 3(205) (e.g., 150W in the present illustrative example), the average sense voltage is above the threshold voltage associated with output power LEVEL3(205) and the first, second, third and fourth flyback AC/DC converter stages 103-106 are enabled. With the first, second, third and fourth flyback AC/DC converter stages 103,104, 105,106 enabled, in the present example, the output power provided to the light source 102 is between 150W and 200W.

If the demand of output power is reduced, the number of flyback AC/DC converter stages 103-106 that are enabled is commensurately reduced. Notably, if the demand of output power remains above LEVEL3(205), the average sense voltage remains above the threshold voltage associated with output power LEVEL3(205), and none of the flyback AC/DC converter stages 103-106 is disabled.

If the demand of output power is reduced below LEVEL 3(205) (e.g., 150W in the present illustrative example), the average sense voltage is below the threshold voltage associated with LEVEL3(205), the fourth flyback AC/DC converter stage 106 is disabled, and the first, second and third flyback AC/DC converter stages 103-105 remain enabled.

If the demand of output power is reduced below LEVEL 2(204) (e.g., 100W in the present illustrative example), the average sense voltage is below the threshold voltage associated with output power LEVEL2(204), the third and fourth flyback AC/DC converter stages 105,106 are disabled, and the first and second flyback AC/DC converter stages 103-104 remain enabled.

If the demand of output power is reduced below LEVEL 1(203) (e.g., 50W in the present illustrative example), the average sense voltage is below the threshold voltage associated with output power LEVEL1(203), the second, third and fourth flyback AC/DC converter stages 104,105,106 are disabled, and the first flyback AC/DC converter stage 103 remains enabled. As noted above, regardless of the demand of output power, the first flyback AC/DC converter stage 103 remains enabled.

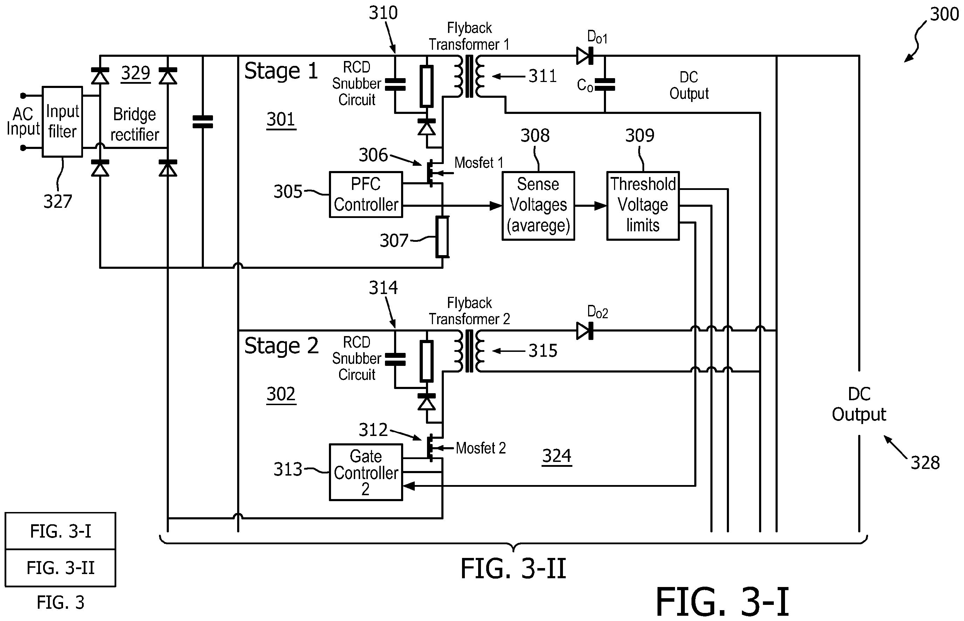

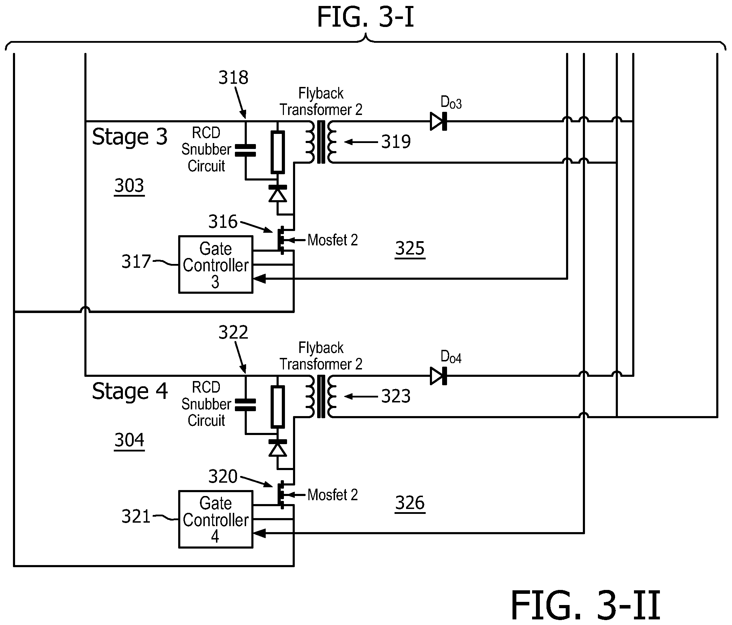

FIG. 3 illustrates a simplified schematic diagram of a driver circuit 300 comprising parallel flyback converter stages in accordance with a representative embodiment. Illustratively, the driver circuit 300 may be implemented as driver circuit 101 described above. Like driver circuit 101, driver circuit 300 comprises four flyback AC/DC converter stages connected electrically in parallel. It is again emphasized that more or fewer than four flyback AC/DC converter stages may be connected electrically in parallel and implemented in the driver circuit 300 to provide more or fewer levels of output power in keeping with the present teachings. Also, the dynamic range of output power of each of the flyback AC/DC converter stages is illustratively 0W to 50W, thereby providing a dynamic output power range for the driver circuit 300 of 0W to 200W. The dynamic output power range of each of the flyback AC/DC converter stages can be less than or greater than the illustrative range. As will become clearer as the present description continues, the upper limit of the output power range of each flyback AC/DC converter stage is generally restrained by design considerations including the practical functional ranges of certain components thereof, such as switches and flyback transformers. However, the maximum output power of the driver circuit 300 can be increased by adding additional flyback AC/DC converter stages connected electrically in parallel.

The driver circuit 300 comprises a first flyback AC/DC converter stage 301, a second flyback AC/DC converter stage 302, a third flyback AC/DC converter stage 303 and a fourth flyback AC/DC converter stage 304, all connected electrically in parallel. The first flyback AC/DC converter stage 301 comprises a controller 305. The first flyback AC/DC converter stage 301 also comprises a first switch 306, which is illustratively a MOSFET switch, and a sense resistor (Rs) 307 connected to the switch 306. Illustratively, the MOSFET is an n-MOSFET and the sense resistor (Rs) 307 is connected to the drain. If the MOSFET were a p-MOSFET, the sense resistor would be connected to the source. In either case, the sense voltage is equal to that average gate-to source voltage (V_{gs-avg}) of the MOSFET of the first flyback AC/DC converter stage 301 over a number of AC cycles. As alluded to above, rather than a threshold voltage, a threshold current can be compared to a sense current. In this illustrative example, the sense current is across the sense resistor, and thus is equal to an average current across the MOSFET (I_{MOSFET-avg}) of the first flyback AC/DC converter stage 301 over a number of AC cycles. Notably, the use of sense resistor (Rₛ) 307 is merely illustrative, and other components for sensing the voltage or current across the switch of the first flyback AC/DC converter stage that are within the purview of one of ordinary skill in the art are contemplated.

Beneficially, because of the parallel connection of a plurality of flyback AC/DC converter stages of the driver circuit 300, the power rating of the first switch 306 is comparatively low. For example, the use of a MOSFET for a first flyback AC/DC converter stage 301 having an output power range of 0W to 50W requires the power rating and capacitance of the MOSFET to be comparatively low. Illustratively, the MOSFET of the first flyback AC/DC converter stage 301 has a voltage rating of approximately 500V and a current rating of 5A. Beneficially, no thermal management structure is required for such a MOSFET. By contrast, known flyback AC/DC converters would require a MOSFET with an 800V voltage rating, a 20A current rating and a thermal management structure to provide an output power approaching 200W.

The first flyback AC/DC converter stage 301 also comprises a first memory 308 and a second memory 309. The first memory 308 stores the sensed voltage levels (averaged over a fixed number of cycles) from the sense resistor (Rs) 307, and the second memory 309 stores the threshold voltage levels for each level of operation. Continuing with the illustrative example of Fig. 2, the second memory 309 stores the threshold voltage levels for output power LEVEL1(203) -LEVEL 3(205). As described more fully below, the threshold voltage levels stored in the second memory 309 are compared with the sense voltage levels to determine whether to enable or disable one or more of the second flyback AC/DC converter stage 302, the third flyback AC/DC converter stage 303 and the fourth flyback AC/DC converter stage 304.

Illustratively, the controller 305 is a PFC controller such as an L6561 PFC controller or an L6562 PFC controller commercially available from ST Microelectronics. The first memory 308 and the second memory 309 are shown as separate memory elements for ease of description of the representative embodiments. Of course, the first memory 308 and the second memory 309 may be instantiated in the controller 305 or may be instantiated in other hardware or firmware (not shown) of the driver circuit 300.

The first flyback AC/DC converter stage 301 also comprises a resistor-capacitor-diode (RCD) snubber circuit 310 and a flyback transformer 311. As is known, the RCD snubber circuit 310 controls the rate of rise of voltage on the drain of the first switch 306 of the first flyback AC/DC converter stage 301. Beneficially, because of the parallel connection of a plurality of flyback AC/DC converter stages of the driver circuit 300, the RCD snubber circuit 310 has a comparatively low power rating; and the flyback transformer 311 is a known flyback transformer that is comparatively small and exhibits commensurately low leakage inductance characteristics. Notably, the capacitor and resistor of the RCD snubber circuit 310 are comparatively small. Moreover, a comparatively low voltage rectifier diode is provided in the RCD snubber circuit 310 because voltage "stress" is comparatively small. By contrast, known RCD snubber circuits require a comparatively high voltage diode (e.g., a high voltage Zener diode).

The second flyback AC/DC converter stage 302 comprises a second switch 312, which is also illustratively a MOSFET. The second flyback AC/DC converter stage 302 also comprises a gate controller 313. The gate controller 313 comprises a comparator that compares the sense voltage level stored in the first memory 308 with a first threshold voltage level (e.g., the threshold voltage associated with output power LEVEL1(203)) stored in the second memory 309. If the second switch 312 is not conducting, and the sense voltage level is greater than the first threshold voltage, the gate controller 313 turns the second switch 312 'on' and the second flyback AC/DC converter stage 302 is enabled. By contrast, if the second switch 312 is conducting and thus the second flyback AC/DC converter stage 302 is enabled, and the sense voltage goes below the first threshold voltage, the gate controller 313 turns the second switch 312 'off' and the second flyback AC/DC converter stage 302 is disabled. Of course, if the second switch 312 is not conducting, and the sense voltage level is less than the first threshold voltage, the gate controller 313 does not turn the second switch 312 'on' and the second flyback AC/DC converter stage 302 remains disabled.

The second flyback AC/DC converter stage 302 also comprises a RCD snubber circuit 314 and a flyback transformer 315. The RCD snubber circuit 314 and the flyback transformer 315 are substantially identical to the RCD snubber circuit 310 and the flyback transformer 311 described above.

The third flyback AC/DC converter stage 303 comprises a third switch 316, which is also illustratively a MOSFET. The third flyback AC/DC converter stage 303 also comprises a gate controller 317. The gate controller 317 comprises a comparator that compares the sense voltage level stored in the first memory 308 with a second threshold voltage level (e.g., the threshold voltage of associated with output power LEVEL2(204)) stored in the second memory 309. If the third switch 316 is not conducting, and the sense voltage level is greater than the second threshold voltage, the gate controller 317 turns the third switch 316 'on' and the third flyback AC/DC converter stage 303 is enabled. By contrast, if the third switch 316 is conducting and thus the third flyback AC/DC converter stage 303 is enabled, and the sense voltage goes below the second threshold voltage, the gate controller 317 turns the third switch 316 'off' and the third flyback AC/DC converter stage 303 is disabled. Of course, if the third switch 316 is not conducting, and the sense voltage level is less than the second threshold voltage, the gate controller 317 does not turn the third switch 316 'on' and the third flyback AC/DC converter stage 303 remains disabled.

The third flyback AC/DC converter stage 303 also comprises a RCD snubber circuit 318 and a flyback transformer 319. The RCD snubber circuit 318 and the flyback transformer 319 are substantially identical to the RCD snubber circuit 310 and the flyback transformer 311 described above.

The fourth flyback AC/DC converter stage 304 comprises a fourth switch 320, which is also illustratively a MOSFET. The fourth flyback AC/DC converter stage 304 also comprises a gate controller 321. The gate controller 321 comprises a comparator that compares the sense voltage level stored in the first memory 308 with a third threshold voltage level (e.g., the threshold voltage associated with output power LEVEL3(205)) stored in the second memory 309. If the fourth switch 320 is not conducting, and the sense voltage level is greater than the third threshold voltage, the gate controller 321 turns the fourth switch 320 'on' and the fourth flyback AC/DC converter stage 304 is enabled. By contrast, if the fourth switch 320 is conducting and thus the fourth flyback AC/DC converter stage 304 is enabled, and the sense voltage goes below the second threshold voltage, the gate controller 321 turns the fourth switch 320 'off' and the fourth flyback AC/DC converter stage 304 is disabled. Of course, if the fourth switch 320 is not conducting, and the sense voltage level is less than the third threshold voltage, the gate controller 321 does not turn the fourth switch 320 'on' and the fourth flyback AC/DC converter stage 304 remains disabled.

The fourth flyback AC/DC converter stage 304 also comprises a RCD snubber circuit 322 and a flyback transformer 323. The RCD snubber circuit 322 and the flyback transformer 323 are substantially identical to the RCD snubber circuit 310 and the flyback transformer 311 described above.

In operation, and as described more fully below, a signal 324 is provided from the second memory 309 to the gate controller 313. The signal 324 includes the threshold voltage stored in the second memory 309 and the sense voltage level stored in the first memory 308. The gate controller 313 comprises a comparator adapted to compare the threshold voltage stored and the sense voltage level. Based on this comparison, the gate controller 313 turns the second switch 312 on, or off, or makes no change to the current operating state of the second switch 312.

Similarly, a signal 325 is provided from the second memory 309 to the gate controller 317. The signal 325 includes the threshold voltage stored in the second memory 309 and the sense voltage level stored in the first memory 308. The gate controller 317 comprises a comparator adapted to compare the threshold voltage stored and the sense voltage level. Based on this comparison, the gate controller 317 turns the third switch 316 on, or off, or makes no change to the current operating state of the third switch 316.

Similarly, a signal 326 is provided from the second memory 309 to the gate controller 321. The signal 325 includes the threshold voltage stored in the second memory 309 and the sense voltage level stored in the first memory 308. The gate controller 321 comprises a comparator adapted to compare the threshold voltage stored and the sense voltage level. Based on this comparison, the gate controller 321 turns the fourth switch 320 on, or off, or makes no change to the current operating state of the fourth switch 320.

Through the operation of the first-fourth flyback AC/DC converter stages 301-304, an input AC signal 327 is provided as a DC output 328 after initial rectification by a bridge rectifier 329.

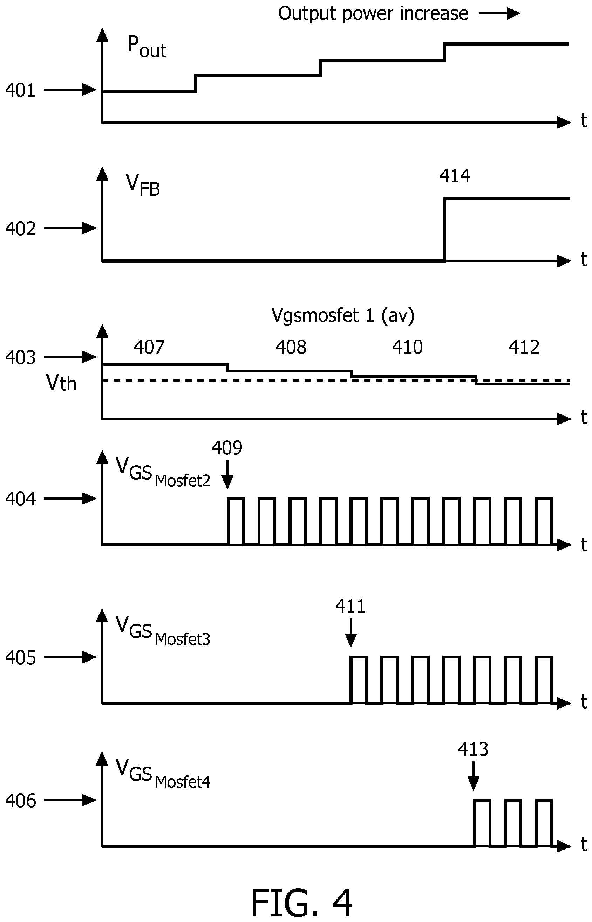

Fig. 4 illustrates graphs of output power versus time (curve 401), feedback voltage (V_{fb}) versus time (curve 402), average sense voltage across a sense resistor (curve 403), gate-to-source (Vgs) across a second MOSFET versus time (curve 404), Vgs across a third MOSFET versus time (curve 405), and Vgs across a fourth MOSFET versus time (curve 406) in accordance with a representative embodiment.

As shown in curve 401, the output power increases over a number of cycles of AC input and with time. In this example, and as will become clearer as the present description continues, the threshold Vₜₕ (shown in curve 403) is at a level that will require all four flyback AC/DC converter stages 301-304 to be enabled. As such, the demand for power at the DC output 328 is at its highest level (e.g., LEVEL 3 (205) in the example of Fig. 2).

At 407, the sense voltage, which is the voltage across the sense resistor (Rₛ) 307 (and thus across the first switch 306) averaged over a number of AC cycles, is above the threshold voltage. At this point of operation, only the first flyback AC/DC converter stage 301 is engaged. As described above, because the sense voltage at 407 is above the threshold voltage, additional flyback AC/DC converter stage(s) are required to be enabled to provide the desired output voltage. In this case, the threshold voltage, which is stored in the second memory 309, is compared by the gate controller 313 of the second flyback AC/DC converter stage 302 to the sense voltage, which is stored in the first memory 308. Because the sense voltage is greater than the threshold voltage, the demand for DC output power is greater than that which is supplied by the first flyback AC/DC converter stage 301 alone, and the gate controller 313 enables the second flyback AC/DC converter stage 302 as shown at 409 in curve 404. This results in a decrease in the sense voltage as shown at 408 in curve 403. However, the sense voltage at 408 remains greater than the threshold voltage, and as such, activating the first and second flyback AC/DC converter stages 301, 302, while increasing the output power, has not resulted in the threshold voltage's being met and thus has not resulted in suitable output DC power at the DC output 328.

Because the sense voltage remains greater than the threshold voltage at 408, the threshold voltage, which is stored in the second memory 309, is compared by the gate controller 317 of the third flyback AC/DC converter stage 303 to the sense voltage, which is stored in the first memory 308. Because the sense voltage is still greater than the threshold voltage, the demand for DC output power is greater than that which is supplied by the first flyback AC/DC converter stage 301 and the second flyback AC/DC converter stage 302, and the gate controller 317 enables the third flyback AC/DC converter stage 303 as shown at 411 in curve 405. This results in a decrease in the sense voltage as shown at 410 in curve 403. However, the sense voltage at 410 remains greater than the threshold voltage, and as such, activating the first, second and third flyback AC/DC converter stages 301, 302,303, while increasing the output power, has not resulted in the threshold voltage's being met and thus has not resulted in suitable output DC power at the DC output 328.

Because the sense voltage remains greater than the threshold voltage at 410, the threshold voltage, which is stored in the second memory 309, is compared by the gate controller 321 of the fourth flyback AC/DC converter stage 304 to the sense voltage, which is stored in the first memory 308. Because the sense voltage is still greater than the threshold voltage, the demand for DC output power is greater than that which is supplied by the first, second and third flyback AC/DC converter stages 301, 302, 303, the gate controller 321 enables the fourth flyback AC/DC converter stage 304 as shown at 413 in curve 406. This results in a decrease in the sense voltage as shown at 412 in curve 403. Now, the sense voltage is slightly less than the threshold voltage, and as such, activating the first, second, third and fourth AC/DC converter stages 301, 302, 303, 304, while increasing the output power, has resulted in the DC output power at the DC output 328 being equal to the demand. Notably, at 414, the feedback voltage reaches its operating point indicating that the output power equals the demand.

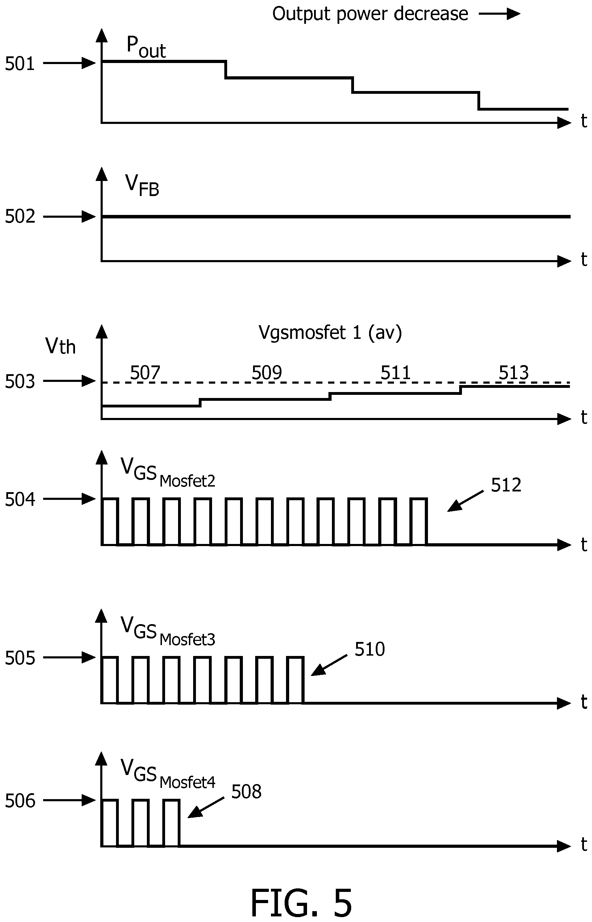

Fig. 5 illustrates graphs of output power versus time (curve 501), feedback voltage versus time (V_{fb}) (curve 502), average sense voltage across a sense resistor (curve 503), gate-to-source (Vgs) across a second MOSFET versus time (curve 504), Vgs across a third MOSFET versus time (curve 505), and Vgs across a fourth MOSFET versus time (curve 506) in accordance with a representative embodiment.

As shown in curve 501, the output power decreases over a number of cycles of AC input and with time. In this example, and as will become clearer as the present description continues, the threshold Vₜₕ (shown in curve 503) is at a level that will require only the first flyback AC/DC converter stage 301 to be enabled. As such, the demand for power at the DC output 328 is at its lowest level (e.g., below LEVEL 1 (203) in the example of Fig. 2).

At 507, the sense voltage, which is the voltage across the sense resistor (Rₛ) 307 (and thus across the first switch 306) averaged over a number of AC cycles, is below the threshold voltage. At this point of operation, all four flyback AC/DC converter stages 301-304 are engaged, as is shown in curves 504-506. Thus, the driver circuit 300 is fully engaged and operating above LEVEL 3 (205) of Fig. 2. As described above, because the sense voltage at 507 is below the threshold voltage, fewer flyback AC/DC converter stage(s) are required to be enabled to provide the desired output voltage. Thus, one or more flyback AC/DC converter stages will need to be disabled.

The threshold voltage, which is stored in the second memory 309, is compared by the gate controller 321 of the fourth flyback AC/DC converter stage 304 to the sense voltage, which is stored in the first memory 308. Because the sense voltage is less than the threshold voltage, the demand for DC output power is less than that which is supplied by the first through fourth flyback AC/DC converter stages 301-304. Accordingly, the gate controller 321 disables the fourth switch 320 and as a result disables the fourth flyback AC/DC converter stage 304 as shown at 508 in curve 506. This results in a decrease in the sense voltage as shown at 509 in curve 503. However, the sense voltage at 509 remains less than the threshold voltage, and as such, disabling the fourth flyback AC/DC converter stage 304, while decreasing the output power at the DC output 328, has not resulted in the threshold voltage's being met and thus has not resulted in suitable output DC power at the DC output 328.

Because the sense voltage remains lower than the threshold voltage at 509, the threshold voltage, which is stored in the second memory 309, is compared by the gate controller 317 of the third flyback AC/DC converter stage 303 to the sense voltage, which is stored in the first memory 308. Because the sense voltage is still lower than the threshold voltage, the demand for DC output power is less than that which is supplied by the first, second and third flyback AC/DC converter stages 301-303, and the gate controller 317 disables the third switch 316 and, thus the third AC/DC converter stage 303 as shown at 510 in curve 505. This results in an increase in the sense voltage as shown at 511 in curve 503. However, the sense voltage at 511 remains less than the threshold voltage, and as such, disabling the third and fourth flyback AC/DC converter stages 303, 304, while decreasing the output power, has not resulted in the threshold voltage's being met and thus has not resulted in suitable output DC power at the DC output 328.

Because the sense voltage remains lower than the threshold voltage at 511, the threshold voltage, which is stored in the second memory 309, is compared by the gate controller 313 of the third flyback AC/DC converter stage 303 to the sense voltage, which is stored in the first memory 308. Because the sense voltage is still lower than the threshold voltage, the demand for DC output power is less than that which is supplied by the first and second flyback AC/DC converter stages 301-302, and the gate controller 313 disables the second switch 312 and as a result, disables the second flyback AC/DC converter stage 302 as shown at 512 in curve 504. This results in a decrease in the sense voltage as shown at 513 in curve 503. As a result of disabling the second, third and fourth flyback AC/DC converter stages 302, 303, 304, the sense voltage is slightly less than the threshold voltage. Accordingly, the output DC power at the DC output 328 is at an appropriate level for the demand of the light source. Notably, the sense voltage can be exactly equal to the threshold voltage, indicating that the DC output exactly equals the demand by the light source.

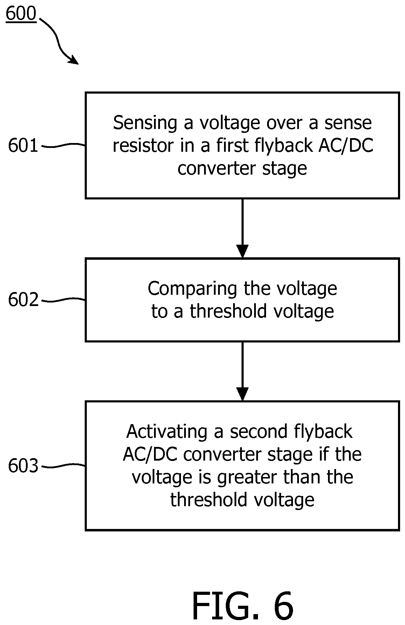

Fig. 6 illustrates a flow-diagram of a method 600 of driving a light source in accordance with a representative embodiment. The method 600 may be implemented in hardware and software such as described in connection with the representative embodiments of Figs. 1-5. Many of the details described in connection with representative embodiments of Figs. 1-5 are common to the presently described method, and generally are not repeated to avoid obscuring the description of the representative embodiments.

At 601, the method 600 comprises sensing a voltage over a sense resistor in a first flyback AC/DC converter stage. At 602, the method 600 comprises comparing the voltage to a threshold voltage. At 603, the method 600 comprises enabling a second flyback AC/DC converter stage if the voltage is greater than the threshold voltage.

As should be appreciated, the method 600 may be continued to enable more flyback AC/DC converter stages of the driver circuit (e.g., driver circuit 300) as needed to provide the requisite output power. Moreover, after attaining a desired output power, the method 600 may be 'reversed' to reduce the output power by disabling flyback AC/DC converter stages of the driver circuit.

## Claims

1. An apparatus (101, 300) for providing an output power to drive a light source (102), the apparatus, comprising:
a first flyback alternating current to direct current (AC/DC) converter stage (103, 301) adapted to provide an output power to drive said light source (102) and comprising a first switch (306) and a first switch controller (305) for controlling the first switch to selectively enable the first flyback AC/DC converter stage wherein a sense resistor (307) is connected to the first switch (306) for measuring the current across the first switch, said current being representative of the output power demand by the light source; and
a second flyback AC/DC converter stage (104, 302) adapted to provide an output power to drive said light source (102) and comprising a comparator (313) for comparing the measure of the current across the first switch with a threshold value, a second switch (312), and a second switch controller (313) for controlling the second switch to selectively enable the second flyback AC/DC converter stage in response to an output of the comparator, the second flyback AC/DC converter stage being electrically connected in parallel with the first flyback AC/DC converter stage.

2. An apparatus as claimed in claim 1, wherein the first switch comprises a first metal oxide semiconductor field effect transistor (MOSFET).

3. An apparatus as claimed in claim 1, wherein the second switch comprises a second MOSFET.

4. An apparatus as claimed in claim 1, wherein the first switch controller comprises a power factor controller (PFC).

5. An apparatus as claimed in claim 3, wherein the second controller comprises a gate controller.

6. An apparatus as claimed in claim 4, wherein the PFC controller comprises a memory comprising threshold limit data for an output power.

7. An apparatus as claimed in claim 1, further comprising:
a third flyback AC/DC converter stage adapted to provide an output power to drive said light source and comprising a third switch and a third switch controller for controlling the third switch to selectively enable the third flyback AC/DC converter stage, the third flyback AC/DC converter stage being electrically connected in parallel with the first flyback AC/DC converter stage and the second flyback AC/DC converter stage.

8. An apparatus as claimed in claim 7, further comprising:
a fourth flyback AC/DC converter stage adapted to provide an output power to drive said light source and comprising a fourth switch and a fourth switch controller for controlling the fourth switch to selectively enable the forth flyback AC/DC converter stage, the fourth flyback AC/DC converter stage being electrically connected in parallel with the first flyback AC/DC converter stage, the second flyback AC/DC converter stage and the third flyback AC/DC converter stage.

9. An apparatus as claimed in claim 7, wherein the third switch comprises a third MOSFET and the third switch controller comprises a gate controller.

10. An apparatus as claimed in claim 8, wherein the fourth switch comprises a fourth MOSFET and the fourth switch controller comprises a gate controller.

11. A method of driving a light source (102), the method comprising:
sensing a voltage over a sense resistor (307) in a first flyback AC/DC converter stage adapted to provide an output power to drive said light source and (103, 301), said voltage over said sense resistor (307) corresponding to an output power demanded by the light source (601);
comparing the voltage to a threshold voltage (602); and
enabling, in parallel to said first flyback AC/DC converter stage, a second flyback AC/DC converter stage (104, 302) adapted to provide an output power to drive said light source, if the voltage over said sense resistor (307) is greater than the threshold voltage (603).

12. A method as claimed in claim 11, further comprising:
enabling, in parallel to the first and second flyback AC/DC converter stage, a third flyback AC/DC converter stage adapted to provide an output power to drive said light source and if the voltage over said sense resistor (307) is greater than the threshold voltage after the enabling of the second AC/DC converter stage.

13. A method as claimed in claim 12, further comprising enabling, in parallel to the first, second and third flyback AC/DC converter stage, a fourth flyback AC/DC converter stage adapted to provide an output power to drive said light source, if the voltage over said sense resistor (307) is greater than the threshold voltage after the enabling of the third AC/DC converter stage.

14. A method as claimed in claim 11, further comprising:
not enabling the second stage if the voltage over said sense resistor (307) is less than the threshold voltage.

15. A method as claimed in claim 13, further comprising, after enabling the fourth flyback AC/DC converter stage adapted to provide an output power to drive said light source, sensing the voltage over the sense resistor, and if the voltage over said sense resistor (307) is less than the threshold voltage, disabling the fourth flyback AC/DC converter stage.

## Patentansprüche

1. Gerät (101, 300) zum Bereitstellen einer Ausgangsleistung, um eine Lichtquelle (102) anzusteuern, wobei das Gerät Folgendes umfasst:
eine erste Wechselstrom-zu-Gleichstrom (AC/DC)-Sperrwandlerstufe (103, 301), die angepasst ist, um eine Ausgangsleistung zum Ansteuern der Lichtquelle (102) bereitzustellen und die einen ersten Schalter (306) und eine erste Schaltersteuervorrichtung (305) zum Steuern des ersten Schalters umfasst, um die erste Wechselstrom-zu-Gleichstrom-Sperrwandlerstufe selektiv zu aktivieren, wobei ein Messwiderstand (307) mit dem ersten Schalter (306) zum Messen des Stroms über dem ersten Schalter verbunden ist, wobei der Strom für die Ausgangsleistungsanfrage der Lichtquelle repräsentativ ist, und
eine zweite Wechselstrom-zu-Gleichstrom-Sperrwandlerstufe (104, 302), die angepasst ist, um eine Ausgangsleistung zum Ansteuern der Lichtquelle (102) bereitzustellen, und die einen Komparator (313) zum Vergleichen der Messung des Stroms über dem ersten Schalter mit einem Schwellenwert umfasst, einen zweiten Schalter (312) und eine zweite Schaltersteuervorrichtung (313) zum Steuern des zweiten Schalters, um die zweite Wechselstrom-zu-Gleichstrom-Sperrwandlerstufe als Reaktion auf eine Ausgabe des Komparators selektiv zu aktivieren, wobei die zweite Wechselstrom-zu-Gleichstrom-Sperrwandlerstufe elektrisch mit der ersten Wechselstrom-zu-Gleichstrom-Sperrwandlerstufe parallel geschaltet ist.

2. Gerät nach Anspruch 1, wobei der erste Schalter einen ersten Metalloxid-Halbleiter-Feldeffekttransistor (MOSFET) umfasst.

3. Gerät nach Anspruch 1, wobei der zweite Schalter einen zweiten MOSFET umfasst.

4. Gerät nach Anspruch 1, wobei der erste Schalter eine Leistungsfaktorsteuervorrichtung (PFC) umfasst.

5. Gerät nach Anspruch 3, wobei die zweite Steuervorrichtung eine Gate-Steuervorrichtung umfasst.

6. Gerät nach Anspruch 4, wobei die PFC-Steuervorrichtung einen Speicher umfasst, der Schwellengrenzdaten für eine Ausgangsleistung umfasst.

7. Gerät nach Anspruch 1, das weiter Folgendes umfasst:
eine dritte Wechselstrom-zu-Gleichstrom-Sperrwandlerstufe, die angepasst ist, um eine Ausgangsleistung zum Ansteuern der Lichtquelle bereitzustellen, und die einen dritten Schalter und eine dritte Schaltersteuervorrichtung zum Steuern des dritten Schalters umfasst, um die dritte Wechselstrom-zu-Gleichstrom-Sperrwandlerstufe selektiv zu aktivieren, wobei die dritte Wechselstrom-zu-Gleichstrom-Sperrwandlerstufe elektrisch mit der ersten Wechselstrom-zu-Gleichstrom-Sperrwandlerstufe und der zweiten Wechselstrom-zu-Gleichstrom-Sperrwandlerstufe parallel geschaltet ist.

8. Gerät nach Anspruch 7, das weiter Folgendes umfasst:
eine vierte Wechselstrom-zu-Gleichstrom-Sperrwandlerstufe, die angepasst ist, um eine Ausgangsleistung zum Ansteuern der Lichtquelle bereitzustellen, und die einen vierten Schalter und eine vierte Schaltersteuervorrichtung zum Steuern des vierten Schalters umfasst, um die vierte Wechselstrom-zu-Gleichstrom-Sperrwandlerstufe selektiv zu aktivieren, wobei die vierte Wechselstrom-zu-Gleichstrom-Sperrwandlerstufe elektrisch mit der ersten Wechselstrom-zu-Gleichstrom-Sperrwandlerstufe, der zweiten Wechselstrom-zu-Gleichstrom-Sperrwandlerstufe und der dritten Wechselstrom-zu-Gleichstrom-Sperrwandlerstufe verbunden ist.

9. Gerät nach Anspruch 7, wobei der dritte Schalter einen dritten MOSFET umfasst, und die dritte Schaltersteuervorrichtung eine Gate-Steuervorrichtung umfasst.

10. Gerät nach Anspruch 8, wobei der vierte Schalter einen vierten MOSFET umfasst, und die vierte Schaltersteuervorrichtung eine Gate-Steuervorrichtung umfasst.

11. Verfahren zum Ansteuern einer Lichtquelle (102), wobei das Verfahren Folgendes umfasst:
das Erfassen einer Spannung über einem Messwiderstand (307) in einer ersten Wechselstrom-zu-Gleichstrom-Sperrwandlerstufe, die angepasst ist, um eine Ausgangsleistung zum Ansteuern der Lichtquelle (103, 301) bereitzustellen, wobei die Spannung über dem Messwiderstand (307) einer Ausgabeleistung, die von der Lichtquelle (601) angefordert wird, entspricht;
das Vergleichen der Spannung mit einer Schwellenspannung (602); und
das Aktivieren parallel zu der ersten Wechselstrom-zu-Gleichstrom-Sperrwandlerstufe einer zweiten Wechselstrom-zu-Gleichstrom-Sperrwandlerstufe (104, 302), die angepasst ist, um eine Ausgangsleistung zum Ansteuern der Lichtquelle bereitzustellen, falls die Spannung über dem Messwiderstand (307) größer ist als die Schwellenspannung (603).

12. Verfahren nach Anspruch 11, das weiter Folgendes umfasst:
das Aktivieren parallel zu der ersten und zweiten Wechselstrom-zu-Gleichstrom-Sperrwandlerstufe einer dritten Wechselstrom-zu-Gleichstrom-Sperrwandlerstufe, die angepasst ist, um eine Ausgangsleistung zum Ansteuern der Lichtquelle bereitzustellen, falls die Spannung über dem Messwiderstand (307) nach dem Aktivieren der zweiten Wechselstrom-zu-Gleichstrom-Sperrwandlerstufe größer ist als die Schwellenspannung.

13. Verfahren nach Anspruch 12, das weiter das Aktivieren parallel zu der ersten, zweiten und dritten Wechselstrom-zu-Gleichstrom-Sperrwandlerstufe einer vierten Wechselstrom-zu-Gleichstrom-Sperrwandlerstufe umfasst, die angepasst ist, um eine Ausgangsleistung zum Ansteuern der Lichtquelle bereitzustellen, falls die Spannung über dem Messwiderstand (307) nach dem Aktivieren der dritten Wechselstrom-zu-Gleichstrom-Sperrwandlerstufe größer ist als die Schwellenspannung.

14. Verfahren nach Anspruch 11, das weiter Folgendes umfasst:
Nicht-Aktivieren der zweiten Stufe, falls die Spannung über dem Messwiderstand (307) kleiner ist als die Schwellenspannung.

15. Verfahren nach Anspruch 13, das weiter nach dem Aktivieren der vierten Wechselstrom-zu-Gleichstrom-Sperrwandlerstufe, die angepasst ist, um eine Ausgangsleistung zum Ansteuern der Lichtquelle bereitzustellen,
das Erfassen der Spannung über dem Messwiderstand umfasst, und, falls die Spannung über dem Messwiderstand (307) kleiner ist als die Schwellenspannung, das Deaktivieren der vierten Wechselstrom-zu-Gleichstrom-Sperrwandlerstufe.

## Revendications

1. Appareil (101, 300) destiné à fournir une puissance de sortie pour exciter une source lumineuse (102), l'appareil comprenant :
un premier étage de conversion de courant alternatif en courant continu (CA/CC) à transfert indirect (103, 301) adapté pour fournir une puissance de sortie pour exciter ladite source lumineuse (102) et comprenant un premier commutateur (306) et un premier contrôleur de commutateur (305) pour contrôler le premier commutateur pour activer sélectivement le premier étage de conversion CA/CC à transfert indirect dans lequel une résistance de détection (307) est connectée au premier commutateur (306) pour mesurer le courant à travers le premier commutateur, ledit courant étant représentatif de la demande de puissance de sortie par la source lumineuse ; et
un deuxième étage de conversion CA/CC à transfert indirect (104, 302) adapté pour fournir une puissance de sortie pour exciter ladite source lumineuse (102) et comprenant un comparateur (313) pour comparer la mesure du courant à travers le premier commutateur à une valeur de seuil, un deuxième commutateur (312), et un deuxième contrôleur de commutateur (313) pour contrôler le deuxième commutateur pour activer sélectivement le deuxième étage de conversion CA/CC à transfert indirect en réponse à une sortie du comparateur, le deuxième étage de conversion CA/CC à transfert indirect étant connecté électriquement en parallèle avec le premier étage de conversion CA/CC à transfert indirect.

2. Appareil selon la revendication 1, dans lequel le premier commutateur comprend un premier transistor à effet de champ à semi-conducteur à oxyde métallique (MOSFET).

3. Appareil selon la revendication 1, dans lequel le deuxième commutateur comprend un deuxième MOSFET.

4. Appareil selon la revendication 1, dans lequel le premier contrôleur de commutateur comprend un contrôleur de facteur de puissance (PFC).

5. Appareil selon la revendication 3, dans lequel le deuxième contrôleur comprend un contrôleur de grille.

6. Appareil selon la revendication 4, dans lequel le contrôleur PFC comprend une mémoire comprenant des données limites de seuil pour une puissance de sortie.

7. Appareil selon la revendication 1, comprenant en outre :
un troisième étage de conversion CA/CC à transfert indirect adapté pour fournir une puissance de sortie pour exciter ladite source lumineuse comprenant un troisième commutateur et un troisième contrôleur de commutateur pour contrôler le troisième commutateur pour activer sélectivement le troisième étage de conversion CA/CC à transfert indirect, le troisième étage de conversion CA/CC à transfert indirect étant connecté électriquement en parallèle avec le premier étage de conversion CA/CC à transfert indirect et le deuxième étage de conversion CA/CC à transfert indirect.

8. Appareil selon la revendication 7, comprenant en outre :
un quatrième étage de conversion CA/CC à transfert indirect adapté pour fournir une puissance de sortie pour exciter ladite source lumineuse comprenant un quatrième commutateur et un quatrième contrôleur de commutateur pour contrôler le quatrième commutateur pour activer sélectivement le quatrième étage de conversion CA/CC à transfert indirect, le quatrième étage de conversion CA/CC à transfert indirect étant connecté électriquement en parallèle avec le premier étage de conversion CA/CC à transfert indirect, le deuxième étage de conversion CA/CC à transfert indirect et le troisième étage de conversion CA/CC à transfert indirect.

9. Appareil selon la revendication 7, dans lequel le troisième commutateur comprend un troisième MOSFET et le troisième contrôleur de commutateur comprend un contrôleur de grille.

10. Appareil selon la revendication 8, dans lequel le quatrième commutateur comprend un quatrième MOSFET et le quatrième contrôleur de commutateur comprend un contrôleur de grille.

11. Procédé d'excitation d'une source lumineuse (102), le procédé comprenant :
la détection d'une tension sur une résistance de détection (307) dans un premier étage de conversion CA/CC à transfert indirect (103, 301) adapté pour fournir une puissance de sortie pour exciter ladite source lumineuse, ladite tension sur ladite résistance de détection (307) correspondant à une puissance de sortie demandée par la source lumineuse (601) ;
la comparaison de la tension à une tension seuil (602) ;
l'activation en parallèle audit premier étage de conversion CA/CC à transfert indirect, d'un deuxième étage de conversion CA/CC à transfert indirect (104, 302) adapté pour fournir une puissance de sortie pour activer ladite source lumineuse, si la tension sur ladite résistance de détection (307) est supérieure à la tension seuil (603).

12. Procédé selon la revendication 11, comprenant en outre :
l'activation en parallèle au premier et au deuxième étage de conversion CA/CC à transfert indirect, d'un troisième étage de conversion CA/CC à transfert indirect adapté pour fournir une puissance de sortie pour activer ladite source lumineuse, si la tension sur ladite résistance de détection (307) est supérieure à la tension seuil après l'activation du deuxième étage de conversion CA/CC.

13. Procédé selon la revendication 12, comprenant en outre l'activation en parallèle au premier, au deuxième et au troisième étage de conversion CA/CC à transfert indirect, d'un quatrième étage de conversion CA/CC à transfert indirect adapté pour fournir une puissance de sortie pour activer ladite source lumineuse, si la tension sur ladite résistance de détection (307) est supérieure à la tension seuil après l'activation du troisième étage de conversion CA/CC.

14. Procédé selon la revendication 11, comprenant en outre :
la non-activation du deuxième étage si la tension sur ladite résistance de détection (307) est inférieure à la tension seuil.

15. Procédé selon la revendication 13, comprenant en outre, après l'activation du quatrième étage de conversion CA/CC à transfert indirect adapté pour fournir une tension de sortie pour exciter ladite source lumineuse, la détection de la tension sur la résistance de détection, et si la tension sur ladite résistance de détection (307) est inférieure à la tension seuil, la désactivation du quatrième étage de conversion CA/CC à transfert indirect.
